Europäisches Patentamt

European Patent Office

Office européen des brevets

(19)

(11) **EP 1 217 765 A1**

## (12) DEMANDE DE BREVET EUROPEEN

(43) Date de publication:
**26.06.2002 Bulletin 2002/26**

(51) Int Cl.$^7$: **H04B 10/18**

(21) Numéro de dépôt: **01403146.2**

(22) Date de dépôt: **06.12.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **21.12.2000 FR 0016756**

(71) Demandeur: **ALCATEL
75008 Paris (FR)**

(72) Inventeurs:
• **Penninckx, Denis
91620 Nozay (FR)**

• **Leclerc, Olivier
91240 Saint Michel S/Orge (FR)**
• **Lanne, Stéphanie
75014 Paris (FR)**

(74) Mandataire: **Fournier, Michel et al
Companie Financière Alcatel,
DPI,
30, Avenue Kléber
75116 Paris (FR)**

(54) **Générateur de retard de groupe différentiel ajustable et compensateur de dispersion de polarisation l'incorporant**

(57)     Le dispositif (DDG) générateur de retard de groupe différentiel ajustable comporte :

-     un séparateur de polarisation (3) divisant un signal d'entrée (S1) en deux composantes (Sd, Sq) ayant des états de polarisation orthogonaux,
-     des moyens de retard ajustables (4) recevant une des composantes (Sd).

    Pour présenter une bonne précision et un faible temps de réponse, les moyens de retard ajustables (4) comprennent :

-     un modulateur de phase réglable (10) appliquant une modulation de phase à l'onde porteuse de la composante (Sd) pour fournir un signal intermédiaire (S2) porté par une longueur d'onde modifiée, et
-     un élément dispersif retardateur (12) recevant le signal intermédiaire (S2) et fournissant un signal retardé (S3).

    Application à la compensation de la dispersion de polarisation dans les transmissions optiques à longue distance, notamment par fibres standard.

FIG_5

EP 1 217 765 A1

## Description

L'invention se situe dans le domaine des transmissions de signaux par des moyens optiques et plus particulièrement des transmissions à haut débit sur des liaisons à longue distance utilisant des fibres optiques.

L'invention concerne plus précisément un dispositif générateur de retard de groupe différentiel pour signaux optiques ainsi qu'un dispositif compensateur de dispersion de polarisation l'incorporant.

On rappelle qu'un système de transmission à fibre optique comporte typiquement :

- un terminal émetteur utilisant au moins une onde porteuse optique dont il module la puissance et/ou la fréquence optique en fonction de l'information à transmettre,
- une liaison de transmission optique constituée d'au moins une section de fibre monomode acheminant le signal émis par le terminal émetteur,
- et un terminal récepteur recevant le signal optique transmis par la fibre.

La performance d'un système de transmission optique, notamment en termes de qualité de signal et de débit, est limitée notamment par les propriétés optiques de la liaison qui est le siège des phénomènes physiques ayant pour effet de dégrader les signaux optiques. Parmi tous les phénomènes identifiés, l'atténuation de la puissance optique et la dispersion chromatique sont ceux qui sont apparus en premier comme les plus contraignants et pour lesquels on a proposé des moyens pour remédier au moins partiellement aux dégradations qu'ils entraînent. L'atténuation dans les fibres a pu être compensée au moyen d'amplificateurs optiques disposés en amont ou en aval ou tout au long de la liaison. Le problème de la dispersion chromatique est sensible avec les fibres standard. Une solution consiste à insérer dans la liaison au moins une fibre dispersive de compensation, appelée "fibre de compensation de dispersion chromatique" ou DCF (de l'anglais "Dispersion Compensating Fiber").

Un autre phénomène défavorable est la "dispersion modale de polarisation" (en l'anglais "Polarisation Mode Dispersion). Dans les conditions d'exploitation actuelles des transmissions optiques, ce phénomène n'est plus négligeable par rapport à la dispersion chromatique dès que l'on cherche à augmenter toujours davantage les longueurs des liaisons et surtout le débit.

Même en l'absence de dispersion chromatique et bien que l'onde porteuse fournie par une diode laser au niveau de l'émetteur soit totalement polarisée, les fibres sont le siège d'une dispersion de polarisation qui a par exemple pour effet qu'une impulsion émise par le terminal émetteur est reçue déformée après sa propagation dans une fibre et présente une durée supérieure à sa durée originale.

Cette déformation est due à la biréfringence des fibres qui a pour effet que le signal optique se dépolarise pendant la transmission. En première approximation, le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent). Autrement dit, un signal impulsionnel reçu à l'extrémité de la fibre de liaison peut être considéré comme étant composé d'un premier signal impulsionnel, polarisé suivant un état de polarisation privilégié et arrivant en premier, et d'un second signal impulsionnel se propageant suivant un état de propagation retardé et arrivant avec un retard appelé "retard de groupe différentiel" ou DGD (de l'anglais "Differential Group Delay") qui dépend notamment de la longueur de la liaison. Ce retard de groupe différentiel DGD et ces deux états principaux de polarisation ou PSP (de l'anglais "Principal States of Polarisation") caractérisent donc la liaison.

Par conséquent, si le terminal émetteur émet un signal optique constitué d'une impulsion très brève, le signal optique reçu par le terminal récepteur est constitué de deux impulsions successives polarisées orthogonalement et ayant un décalage temporel égal au DGD. Comme la détection par le terminal consiste à fournir sous forme électrique une mesure de la puissance optique totale reçue, l'impulsion détectée aura une largeur temporelle augmentée en fonction de la valeur du DGD. Ce retard peut être de l'ordre de 50 picosecondes pour une fibre standard de 100 kilomètres de longueur. Ainsi, pour un signal binaire dont le débit est de 10 gigabits par seconde, ce retard atteint donc la moitié d'un temps bit, ce qui n'est pas acceptable. Ce problème est évidemment encore plus critique pour des débits supérieurs.

Un aspect important du phénomène de dispersion modale de polarisation est que la valeur du retard différentiel DGD et les états principaux de polarisation d'une liaison varient dans le temps en fonction de nombreux facteurs, tels que les vibrations et la température. Ainsi, contrairement à la dispersion chromatique, la dispersion de polarisation doit être considérée comme un phénomène aléatoire. En particulier, on caractérisera la dispersion de polarisation d'une liaison par une valeur dite "PMD" (de l'anglais "Polarisation Mode Dispersion Delay") définie comme la valeur moyenne de DGD mesuré.

Plus précisément, on montre que la dispersion de polarisation peut être représentée par un vecteur de rotation aléatoire $\Omega$ dans l'espace de Poincaré où l'on représente habituellement les états de polarisation d'une onde optique par un vecteur d'état de polarisation **S,** dit vecteur de Stokes, dont l'extrémité est située sur une sphère.

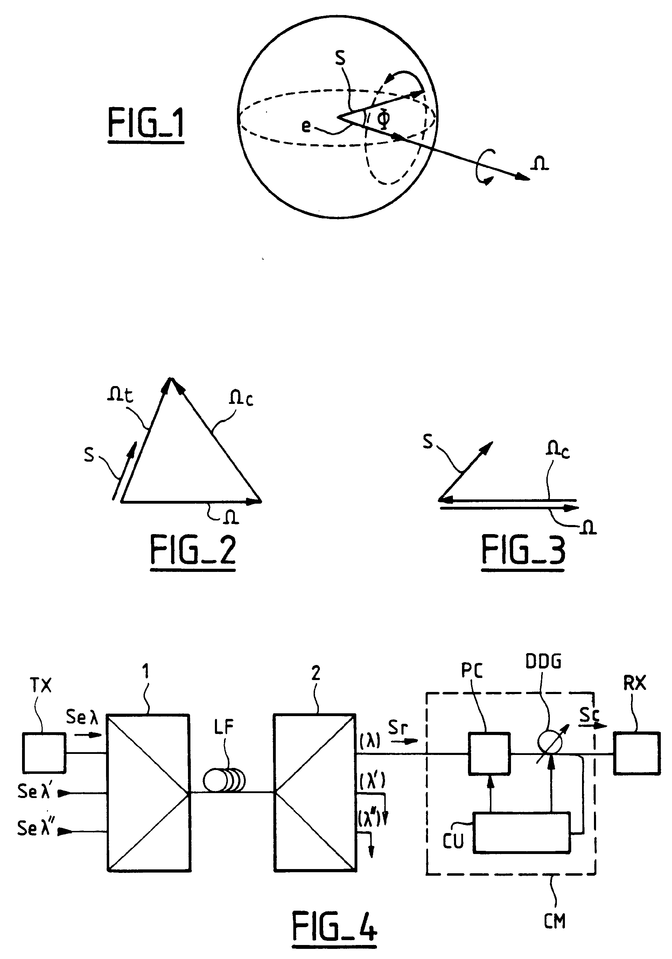

La figure 1 montre les principaux vecteurs impliqués : le vecteur **S** d'état de polarisation d'un signal optique, le vecteur $\Omega$ de dispersion de polarisation de la liaison et le vecteur **e** des états principaux de polarisation PSP de la liaison. $\Phi$ est l'angle entre **S** et $\Omega$.

Les vecteurs **e** et $\Omega$ ont la même direction et l'effet au premier ordre de la dispersion de polarisation sur le vecteur **S** du signal optique émis se traduit par la relation : $\partial \mathbf{S}/\partial \omega = \Omega \otimes \mathbf{S}$, où $\omega$ est la pulsation de l'onde optique, le symbole $\otimes$ désignant le produit vectoriel.

Le module de $\Omega$ est la valeur du retard de groupe différentiel DGD de la liaison, c'est-à-dire de la différence entre les temps de propagation entre deux ondes polarisées selon les deux états principaux de polarisation de cette liaison.

Un des principes de compensation de la dispersion de polarisation consiste à insérer entre la liaison et le récepteur un dispositif compensateur qui présente un retard de groupe différentiel et des états principaux de polarisation représentés par un vecteur $\Omega \mathbf{c}$ tel que le vecteur $\Omega \mathbf{t}$ résultant de la somme $\Omega + \Omega \mathbf{c}$ soit constamment parallèle à **S** ou nul. Ces deux cas sont illustrés respectivement par les figures 2 et 3.

Une conséquence du caractère aléatoire de la dispersion de polarisation est qu'un dispositif de compensation doit être adaptatif et capable de créer un retard de groupe différentiel DGDc au moins égal à la valeur maximale de retard différentiel DGD que l'on veut compenser.

En pratique, il convient aussi de choisir un paramètre de mesure commode à obtenir et qui soit représentatif de la valeur de PMD. Ce paramètre peut être par exemple le degré de polarisation du signal optique issu du dispositif de compensation ou la largeur spectrale de la modulation du signal électrique obtenu après détection.

Un dispositif de compensation de PMD est décrit dans la demande de brevet européen EP-A-853 395 déposée le 30 décembre 1997 et publiée le 15 juillet 1998.

La figure 4 montre schématiquement et à titre d'exemple un système de transmission optique muni d'un tel dispositif de compensation.

Il s'agit d'un système à multiplexage en longueur d'onde prévu pour véhiculer plusieurs canaux sous la forme de signaux émis Se$\lambda$, Se$\lambda$', Se$\lambda$" portés respectivement par les longueurs d'onde $\lambda$, $\lambda$', $\lambda$". Chaque canal, par exemple Se$\lambda$, est issu d'un terminal émetteur TX émettant un signal optique ayant la forme d'une modulation d'amplitude d'une onde porteuse polarisée. Les canaux sont combinés dans un multiplexeur 1 dont la sortie est couplée à une liaison optique de transmission LF. Cette liaison est typiquement constituée d'une fibre optique et peut comporter des amplificateurs optiques (non représentés) disposés en amont et/ou en aval de la fibre. La liaison peut aussi être composée de plusieurs sections de fibre entre lesquels sont placés des amplificateurs optiques.

L'extrémité de la liaison rejoint au moins un terminal récepteur, par exemple RX, par l'intermédiaire d'un démultiplexeur 2 ayant pour fonction d'extraire le canal Sr destiné au récepteur RX.

Le système comporte des moyens de compensation de la dispersion de polarisation CM disposés entre le démultiplexeur 2 et le récepteur RX. Ces moyens comportent un contrôleur de polarisation PC, des moyens DDG pour engendrer un retard de groupe différentiel de compensation DGDc entre deux modes de polarisation orthogonaux et des moyens d'asservissement CU du contrôleur de polarisation PC.

Selon une première possibilité décrite dans la demande précitée, les moyens DDG engendrent un retard de groupe différentiel fixe et sont par exemple constitués d'une fibre à maintien de polarisation ou PMF (de l'anglais "Polarisation Maintaining Fiber"), qui a la propriété de procurer un retard différentiel fixe avec des états principaux de polarisation invariables.

Le contrôleur de polarisation PC est commandé par les moyens d'asservissement CU en vue de maximiser constamment le degré de polarisation du signal issu du dispositif à retard différentiel.

L'ensemble constitué du contrôleur de polarisation PC ajustable et des moyens DDG est équivalent à un élément optique représentable par un vecteur $\Omega \mathbf{c}$ de module constant et de direction variable en fonction de la commande appliquée au contrôleur de polarisation. A condition que $|\Omega \mathbf{c}| > |\Omega|$, on peut rendre **S** et $\Omega \mathbf{t}$ colinéaires par une commande appropriée du contrôleur de polarisation, ce qui réalise une compensation au premier ordre. Toutefois, il a été trouvé que certains états, en particulier ceux correspondant aux cas où **S** et $\Omega$ sont perpendiculaires, renforcent des effets de PMD d'ordres supérieurs qui ne sont pas négligeables. Ces effets d'ordres supérieurs sont essentiellement dus au fait que la direction de $\Omega \mathbf{t}$ est fonction de $\omega$.

On peut remédier à ce problème en prévoyant des moyens DDG ajustables, comme proposés selon une variante décrite dans la demande précitée. Dans ce cas, le compensateur est équivalent à un élément optique représentable par un vecteur $\Omega \mathbf{c}$ de module et de direction variables en fonction des commandes appliquées respectivement aux moyens DDG ajustables et au contrôleur de polarisation. Par rapport à la première solution, les moyens DDG ajustables donnent en principe la possibilité d'annuler $\Omega \mathbf{t}$ en permanence et donc de s'affranchir des effets de PMD d'ordres supérieurs.

Toutefois, pour que ce but puisse être atteint, il faut que les moyens DDG ajustables soient réalisés au moyen d'un dispositif générateur de retard de groupe différentiel DGD adapté au problème de la PMD. En particulier son temps de réponse doit être compatible avec la rapidité des fluctuations de DGD observées en pratique. De plus, il doit assurer une précision d'autant plus grande que le débit est élevé. Ainsi, pour un signal binaire au format de modulation RZ, il convient que le retard de groupe différentiel moyen après compensation, reste inférieur au tiers du temps bit, ce qui impose de pouvoir ajuster le retard de groupe différentiel du compensateur à une valeur voisine de celui de la liaison et avec une précision meilleure que 33 ps si le débit est de 10 gigabits par seconde et que 8 ps si le débit est de 40 gigabits par seconde.

Pour réaliser un dispositif générateur de retard de groupe différentiel ajustable, une solution consiste à utiliser plusieurs tronçons de fibre à maintien de polarisation de longueurs différentes et, au moyen d'un commutateur optique, de sélectionner celui qui présente le DGD voulu. Toutefois cette réalisation ne fournit que des valeurs discrètes de retard de groupe différentiel et ne permet pas d'atteindre la précision requise. De plus, lors de chaque modification du DGD, le signal subit une perturbation, voire une interruption.

D'autres dispositifs générateurs de retard de groupe différentiel connus utilisent un séparateur de polarisation dont une des sorties est couplée à plusieurs lignes à retard commutées sélectivement. Cette solution présente les mêmes inconvénients que précédemment.

La présente invention vise à pallier les problèmes des dispositifs précités en proposant un dispositif générateur de retard de groupe différentiel ajustable qui soit aisé à l'utilisation, précis et qui ne présente qu'une très faible inertie.

Dans ce but, l'invention a pour objet un dispositif générateur de retard de groupe différentiel pour signaux optiques ayant la forme d'une modulation d'une onde porteuse possédant une longueur d'onde centrale, ledit dispositif comportant :

- un séparateur de polarisation muni d'une entrée pour recevoir un signal optique d'entrée et apte à diviser ledit signal d'entrée en des première et seconde composantes présentant des états de polarisation orthogonaux,
- des moyens de retard ajustables disposés pour recevoir ladite première composante,

caractérisé en ce que lesdits moyens de retard ajustables comprennent :

- un modulateur de phase réglable apte à appliquer une modulation de phase à l'onde porteuse de ladite première composante de façon à fournir un signal intermédiaire porté par une longueur d'onde centrale modifiée, et
- un élément dispersif retardateur présentant une dispersion chromatique, disposé pour recevoir ledit signal intermédiaire et fournir un signal retardé.

Le dispositif selon l'invention peut présenter une ou plusieurs des caractéristiques suivantes :

- les moyens de retard ajustables comprennent en outre un contrôleur du modulateur de phase, apte à ajuster en fonction d'une consigne la profondeur de modulation de phase appliquée à la première composante.
- le signal d'entrée étant un signal binaire présentant un format de modulation de type RZ avec un temps bit déterminé, le contrôleur est prévu pour commander le modulateur de phase périodiquement avec une période égale au temps bit.

Ainsi, l'invention exploite la propriété des milieux dispersifs, tels que les fibres dispersives ou les fibres à réseau de Bragg photo-inscrit , d'imposer à une onde optique les traversant une vitesse de propagation qui est fonction de la longueur d'onde (ou de la fréquence optique) de cette onde. Grâce au modulateur de phase, on peut ajuster une modification appliquée à la longueur d'onde de l'onde porteuse des impulsions constituant une des composantes du signal optique d'entrée et régler ainsi le temps de propagation de ces impulsions dans le milieu dispersif retardateur.

On peut noter que cette solution est bien adaptée aux signaux optiques présentant une modulation d'amplitude de type RZ car la modulation de phase à appliquer peut être mise en oeuvre très simplement à partir d'un signal d'horloge ayant la fréquence bit. Pour d'autre types de modulation tels que la modulation d'amplitude de type NRZ, on ajoute des contraintes au niveau des modulateurs de phase du fait que la variation maximale de phase à appliquer est plus importante.

Pour les signaux classiques mentionnés ci-dessus, on sait par ailleurs que les milieux dispersifs ont pour effet d'élargir les impulsions optiques. Aussi, il convient que la présence de l'élément dispersif retardateur soit prise en compte si la dispersion chromatique de l'élément dispersif retardateur doit être importante pour assurer une large plage de retard différentiel.

En particulier dans l'application à un dispositif compensateur de dispersion de polarisation, les impulsions en sortie du milieu dispersif retardateur peuvent être combinées directement avec les impulsions de la seconde composante extraite du signal d'entrée. Aussi, une compensation sera à prévoir si, à cause de la dispersion chromatique, les impulsions en sortie du milieu dispersif retardateur présentent des largeurs trop différentes de celles de la seconde composante.

On rappelle que le coefficient de dispersion chromatique D d'un milieu est lié à sa constante de propagation β par la relation :

$$d^2\beta/d\omega^2 = -(2\pi c/\omega^2)D,$$

où ω est la pulsation de l'onde optique et c la vitesse de la lumière dans le vide.

D'une façon générale, le coefficient D pourra être positif, nul ou négatif selon la longueur d'onde et le milieu utilisé. Par exemple pour les fibres standard, la dispersion chromatique vaut environ +17 ps/(km.nm) pour une longueur d'onde de 1,5 μm.

On définit pour un élément dispersif homogène ou non, par exemple une liaison comportant une fibre dispersive, une valeur de dispersion chromatique qui peut s'exprimer mathématiquement par la formule :

$$(1) \qquad DL = \int D(z).dz$$

où z est l'abscisse de points placés le long du milieu dispersif, D(z) est son paramètre de dispersion chromatique à abscisse z, l'intégrale qui exprime la dispersion DL étant calculée le long du chemin de propagation des ondes dans le milieu dispersif.

De même, lorsqu'une liaison est constituée de plusieurs éléments dispersifs couplés en cascade, on peut définir pour cette liaison une dispersion chromatique cumulée qui est la somme algébrique des dispersions chromatiques des différents éléments qui forment la liaison.

Aussi pour résoudre l'éventuel problème d'élargissement les impulsions optiques mentionné ci-dessus, les moyens de retard ajustables peuvent comporter en outre un second élément dispersif disposé pour fournir au modulateur de phase une composante précompensée obtenue à partir de la première composante du signal d'entrée, ce second élément dispersif présentant une dispersion chromatique de signe opposé à celui de la dispersion chromatique présentée par l'élément dispersif retardateur, et dont la valeur absolue est au plus égale à celle de cet élément dispersif retardateur.

Grâce à cette disposition, il est assuré que les valeurs absolues des dispersions chromatiques cumulées évaluées à partir du signal d'entrée jusqu'à respectivement l'entrée du modulateur de phase et la sortie de l'élément dispersif retardateur restent inférieures à la valeur absolue de la dispersion chromatique de l'élément dispersif retardateur.

Il est généralement souhaitable que les impulsions en sortie de l'élément dispersif retardateur ne soient pas élargies. Pour cela, on pourra prévoir que le second élément dispersif et l'élément dispersif retardateur présentent des dispersions chromatiques de signes opposés et de sensiblement même valeur absolue.

Bien entendu les dispositions précédentes impliquent que le signal d'entrée ne présente pas d'élargissement de ses impulsions dû à un élément dispersif situé en amont. Dans le cas contraire où le signal d'entrée est obtenu par exemple à partir d'un signal émis et transmis par une liaison optique présentant une dispersion chromatique résiduelle importante, les moyens de retard ajustables comportent un second élément dispersif disposé pour fournir au modulateur de phase une composante compensée obtenue à partir de la première composante du signal d'entrée, ce second élément dispersif présentant une dispersion chromatique telle que la dispersion chromatique cumulée de la liaison optique et du second élément dispersif soit de signe opposé à celui de la dispersion chromatique présentée par l'élément dispersif retardateur, la valeur absolue de cette dispersion chromatique cumulée étant au plus égale à celle de l'élément dispersif retardateur.

La présence du second élément dispersif n'est toutefois indispensable que si la dispersion chromatique cumulée en sortie ou en amont du modulateur de phase, évaluée à partir du signal d'entrée ou du signal émis est suffisante pour élargir sensiblement les impulsions. Un autre cas où on peut se passer du second élément dispersif est celui où le signal d'entrée est constitué d'un train d'impulsions de type soliton, alors que la dispersion chromatique de l'élément dispersif retardateur est positive.

L'invention a également pour objet un dispositif de compensation de dispersion de polarisation pour système de transmission optique comportant un terminal émetteur émettant des données sous la forme d'un signal optique polarisé, une liaison optique de transmission et un terminal récepteur, ce dispositif comportant:

- au moins un contrôleur de polarisation,
- des moyens générateurs de retard de groupe différentiel ajustable, ce contrôleur et ces moyens étant intercalés entre la liaison de transmission et le terminal récepteur,
- et des moyens d'asservissement pour commander le contrôleur de polarisation et les moyens générateur de retard de groupe différentiel,

ces moyens générateur de retard de groupe différentiel comportant au moins un dispositif générateur de retard de groupe différentiel ajustable tel que défini ci-dessus.

D'autres avantages et caractéristiques apparaîtront à la lecture de la description suivante, donnée à titre d'exemple non limitatif et se référant aux figures sur lesquelles :

- la figure 1 représente l'espace de Poincaré déjà commenté précédemment;
- les figures 2 et 3 illustrent deux principes de compensation de dispersion de polarisation également commentés précédemment;
- la figure 4 représente schématiquement un système de transmission optique comportant un dispositif de compensation de dispersion de polarisation, également commenté précédemment;
- la figure 5 montre un dispositif de compensation de dispersion de polarisation selon l'invention intégrant le dispositif générateur de retard de groupe différentiel selon l'invention;
- la figure 6 représente une variante de réalisation du dispositif de compensation de dispersion de polarisation selon l'invention.
- les figures 7 et 8 représentent des chronogrammes permettant d'expliquer le fonctionnement du dispositif selon l'invention.

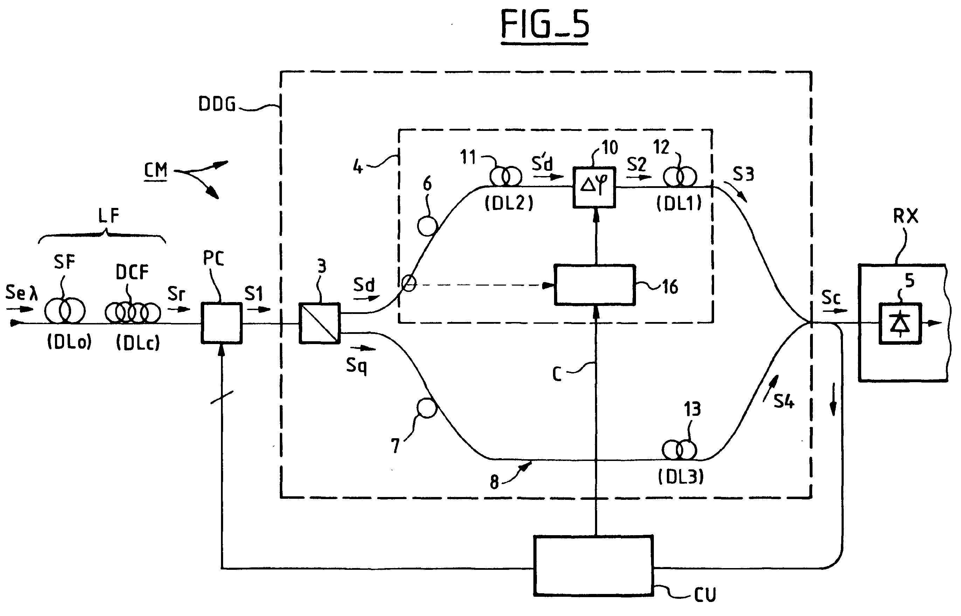

La figure 5 reprend les différents éléments du système de transmission de la figure 4 : la liaison LF, les moyens de compensation de la dispersion de polarisation CM et le terminal récepteur RX. La liaison LF reçoit à une de ses extrémités le signal émis Seλ et délivre le signal Sr reçu au niveau du récepteur. A titre d'exemple, la liaison LF est constituée d'une fibre optique SF, de dispersion chromatique DL0, couplée à une fibre de compensation de dispersion chromatique DCF, de dispersion chromatique DLc.

Les moyens de compensation de la dispersion de polarisation CM comportent un contrôleur de polarisation PC, des moyens DDG pour engendrer un retard de groupe différentiel ajustable et des moyens d'asservissement comportant une unité de commande CU du contrôleur de polarisation PC et des moyens DDG.

Le signal Sr est reçu par le contrôleur de polarisation PC qui fournit aux moyens DDG le signal d'entrée S1.

Ces moyens DDG comportent un séparateur de polarisation 3 qui reçoit le signal d'entrée S1 et en extrait deux composantes Sd, Sq présentant des états de polarisation orthogonaux.

La composante Sd est couplée à des moyens de retard ajustables 4 comportant en cascade un modulateur de phase réglable 10 et un élément dispersif retardateur 12 présentant une dispersion chromatique DL1. La seconde composante Sq est couplée à l'entrée d'une deuxième branche 8 dont la sortie fournit le signal S4.

Le signal optique d'entrée S1 et ses deux composantes Sd, Sq étant portés par une longueur d'onde centrale initiale, le modulateur 10 est apte à appliquer une modulation de phase à l'onde porteuse de la composante Sd de façon à fournir un signal intermédiaire S2 porté par une longueur d'onde centrale modifiée.

L'élément dispersif 12, par exemple une fibre optique dispersive, joue le rôle de fibre retardatrice car elle présente une dispersion DL1 ayant pour effet que le temps de propagation du signal S2 la traversant soit fonction du décalage de la longueur d'onde centrale appliqué par le modulateur de phase 10.

Le signal issu de la fibre 12 constitue un signal retardé S3.

Selon la réalisation représenté sur la figure 5, le signal retardé S3 est couplé avec le signal S4 de façon à former le signal de sortie Sc, dont une partie est destinée à un photodétecteur 5 du récepteur RX, et une autre partie à l'unité de commande CU des moyens d'asservissement. Pour éviter des risques d'interférences entre les signaux S3 et S4, il conviendra de réaliser le couplage de ces signaux par l'intermédiaire de fibres à maintien de polarisation convenablement orientées et au moyen d'un coupleur à maintien de polarisation (non représentés).

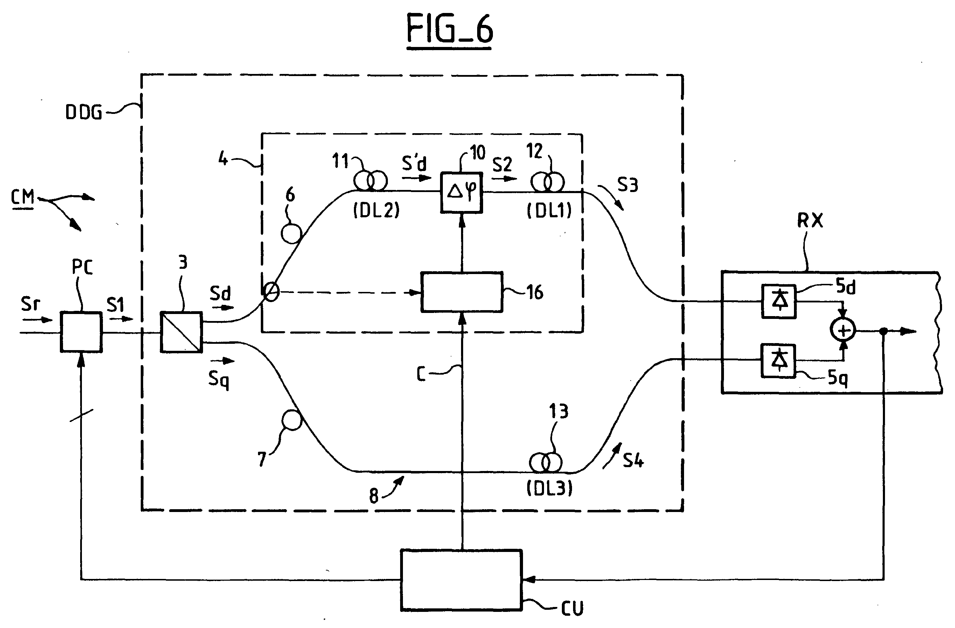

Une variante de réalisation qui permet d'éviter cette contrainte est représentée sur la figure 6. Selon cette variante, les signaux S3 et S4 ne sont pas couplés optiquement, mais sont par contre dirigés respectivement vers deux photodétecteurs 5d, 5q du récepteur RX. Les signaux électriques produits par les photodétecteurs sont ensuite additionnés pour fournir un signal électrique de réception dont une partie est prélevée pour constituer un signal de contre-réaction appliqué à l'unité de commande CU. L'unité CU applique dans ce cas une méthode d'asservissement visant à minimiser la largeur spectrale de la modulation du signal électrique de réception.

Un contrôleur 16 est destiné à appliquer au modulateur de phase 10 une tension de commande appropriée. Ainsi, en fonction d'une consigne C fournie par l'unité de commande CU, le contrôleur 16 ajuste la profondeur de modulation de phase appliquée.

Pour synchroniser les commandes, le contrôleur 16 reçoit un signal représentatif de la modulation de la composante Sd, comme symbolisé par la flèche en pointillés. Un premier élément de retard 6 est placé à l'entrée des moyens de retard 4 pour permettre le calage temporel du contrôleur 16 par rapport à la modulation du signal S'd. Un second élément de retard 7 placés dans la branche 8 est aussi prévu pour un recalage temporel statique des signaux S3 et S4.

Comme exposé précédemment, si la dispersion chromatique de la fibre retardatrice 12 doit être prise en compte pour limiter l'élargissement des impulsions du signal retardé S3, on prévoit un second élément dispersif de précompensation 11 disposé entre le séparateur de polarisation 3 et le modulateur 10 pour que ce dernier reçoive une composante précompensée S'd formée à partir de la composante Sd.

Dans le cas où le signal d'entrée S1 n'a pas subi d'élargissement de ses impulsions, par exemple grâce au compensateur DCF, le second élément dispersif 11 présentera alors une dispersion chromatique DL2 de signe opposé à celui de la dispersion chromatique DL1 de l'élément dispersif retardateur 12, et la valeur absolue de DL2 sera au plus égale à celle de DL1.

Il est généralement souhaitable que les impulsions en sortie de l'élément dispersif retardateur ne soient pas élargies. On prévoira alors que le second élément dispersif 11 présente une dispersion chromatique DL2 dont la valeur absolue est sensiblement égale à celle DL1 de l'élément dispersif retardateur 12.

Cependant, dans ce cas où les impulsions en sortie de l'élément dispersif 12 présentent un minimum d'élargissement dû à la dispersion chromatique, les impulsions appliquées à l'entrée du modulateur de phase présentent un élargissement maximum qui peut être défavorable au fonctionnement du modulateur. C'est pourquoi une compensation partielle pourra dans certains cas être préférable. Aussi, pour que les impulsions en sortie du milieu dispersif retardateur présentent des largeurs analogues à celles du signal S4 issu de la seconde composante Sq, le dispositif comportera avantageusement un troisième élément dispersif de compensation 13 disposé pour recevoir la seconde composante Sq et présentant une dispersion chromatique DL3 sensiblement égale à la dispersion chromatique cumulée DL2+DL1 du second élément dispersif 11 et de l'élément dispersif retardateur 12.

Le signal d'entrée S1 peut par contre avoir subi une dispersion chromatique non compensée. Dans ce cas, le second élément dispersif 11 doit être dimensionné en tenant compte de la dispersion chromatique cumulée de l'ensemble de la liaison entre le signal émis Seλ et le signal d'entrée S1. Le second élément dispersif 11 aura alors une dispersion chromatique DL2 telle que la dispersion chromatique cumulée DL0+DLc+DL2 de la liaison optique et du second élément dispersif 11 soit de signe opposé à celui de la dispersion chromatique DL1 de l'élément dispersif retardateur 12, la valeur absolue de cette dispersion chromatique cumulée étant au plus égale à celle de DL1.

Comme précédemment, l'élargissement minimum des impulsions en sortie de l'élément dispersif retardateur sera obtenu si la dispersion chromatique DL2 est telle que la valeur absolue de la dispersion chromatique cumulée DL0+DLc+DL2 de la liaison optique et du second élément dispersif est sensiblement égale à celle DL1.

Les éléments constitutifs du dispositif mentionnés ci-dessus sont des composants bien connus dans le domaine des transmissions optiques.

Ainsi, pour réaliser l'élément dispersif 12, plutôt qu'une fibre dispersive usuelle, il est préférable d'utiliser un composant à base de fibre munie d'un réseau de Bragg photo-inscrit à période variable (dit réseau "chirpé"). On rappelle que ces composants fonctionnent en réflexion et imposent au composantes spectrales d'une onde injectée des chemins optiques fonction de leurs longueurs d'onde. Pour une valeur de dispersion chromatique donnée, ces composants présentent l'avantage que la longueur de fibre nécessaire est beaucoup plus faible que celle d'une fibre dispersive usuelle. Il en résulte un fonctionnement bien plus stable vis-à-vis des fluctuations de température.

Bien entendu, la présence du second élément dispersif n'est indispensable que si la dispersion chromatique de l'élément dispersif retardateur est suffisante pour élargir sensiblement les impulsions.

Par ailleurs, le problème d'élargissement dû à l'élément dispersif retardateur peut être absent ou du moins atténué si le signal d'entrée est constitué d'un train d'impulsions de type soliton ou s'en rapprochant. En effet, à condition de choisir un élément dispersif retardateur présentant une dispersion chromatique positive, il se produit dans cet élément une compensation de l'élargissement des impulsions dû à la dispersion chromatique par des effets non linéaires (effet Kerr). Il convient toutefois que l'amplitude des impulsions du signal injecté dans l'élément dispersif retardateur soient suffisamment élevée pour faire apparaître les phénomènes non linéaires. En cas de besoin, on peut prévoir un amplificateur optique en amont de l'élément dispersif retardateur.

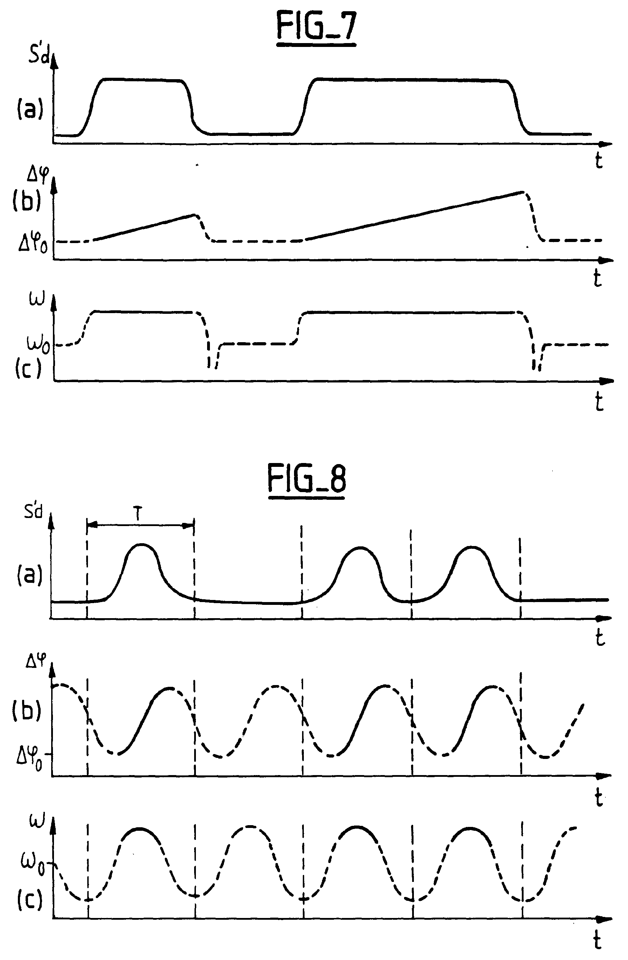

Les chronogrammes représentés sur les figures 7 et 8 vont permettre d'expliquer le principe de fonctionnement du dispositif selon l'invention.

La figure 7 correspond à un cas où le signal d'entrée S1, donc sa composante Sd ou s'd, a la forme d'une modulation d'amplitude quelconque d'une onde porteuse dont la longueur d'onde correspond à une pulsation ω0. Le chronogramme (a) montre un exemple de variations en fonction du temps t de l'amplitude du signal S'd.

En sortie du modulateur 10, le signal S2 présente une modulation d'amplitude analogue et peut s'exprimer en fonction du temps t sous la forme :

$$S2 = A(t) \cos(\omega 0.t + \Delta\varphi),$$

où A(t) est l'amplitude modulée, ω0 la pulsation du signal S'd et Δφ le décalage de phase entre les signaux S2 et S'd créé par le modulateur.

Si la commande appliquée au modulateur 10 n'est pas modulée, S2 conserve la pulsation ω0 du signal S'd.

Si par contre la commande est modulée, Δφ varie en fonction du temps et la pulsation de S2 devient :

$$\omega = \omega 0 + d(\Delta\varphi)/dt$$

Ainsi, en appliquant au modulateur 10 une commande telle que les variations en fonction du temps t du décalage de phase Δφ présentent une pente d(Δφ)/dt non nulle, la pulsation ω de l'onde porteuse de S2 est décalée par rapport à ω0 d'une valeur proportionnelle à cette pente. En particulier, si cette pente est constante, le décalage entre ω et ω0 est constant.

En pratique, comme on ne peut pas augmenter ou diminuer indéfiniment la phase, on module le décalage de phase Δφ de sorte que ce décalage présente la pente requise pendant chaque impulsion du signal S'd, un décalage opposé étant produit pendant les niveaux bas de puissance optique du signal. Une telle modulation de phase à pente sensiblement constante pendant les impulsions est représentée par le chronogramme (b). Il en résulte la variation en fonction du temps t de la pulsation ω, représentée par le chronogramme (c).

Pour ajuster le retard en fonction de la consigne C, le contrôleur 16 commande le modulateur de phase 10 de façon à créer une modulation de phase dont la profondeur de modulation est fonction de cette consigne. Par ailleurs, cette commande est synchronisée avec la modulation d'amplitude du signal S'd, comme schématisé par la flèche en pointillés sur la figure 1. En cas de besoin, pour tenir compte du temps de traitement électronique par le contrôleur 16, on pourra prévoir de retarder le signal S'd d'un retard fixe approprié 6, avant de l'injecter dans le modulateur 10.

Par rapport à un signal qui n'aurait pas subi la modulation de phase, les impulsions du signal S3 issues de la fibre retardatrice 12 présentent un retard ou une avance proportionnel(le) aux valeurs absolues de la dispersion chromatique DL1 de la fibre retardatrice et du décalage entre les pulsations $\omega$ et $\omega0$. De plus, on obtiendra un retard ou une avance selon les signes de la dispersion chromatique DL1 et du décalage entre les pulsations.

Ainsi le retard relatif appliqué au signal S'd est fonction de trois paramètres qui sont :

- le coefficient de dispersion chromatique D de la fibre retardatrice,
- sa longueur, et
- la pente $d(\Delta\varphi)/dt$ du décalage de phase $\Delta\varphi$ en fonction du temps t.

Il est donc possible de déterminer la plage de variation du retard par le choix du type de fibre dispersive et de sa longueur, et par la pente en fonction du temps de la commande du modulateur 10.

La figure 8 correspond à un cas où le signal S'd (chronogramme (a)) présente un format de modulation de type RZ rythmé par une horloge de période T définissant le temps bit.

En pratique, surtout à haut débit, il est plus facile d'obtenir des tensions de commande électrique qui présentent des modulations sensiblement sinusoïdales, dérivées d'un signal d'horloge ayant la fréquence bit, comme représenté sur le chronogramme (b). Si ce signal d'horloge n'est pas disponible au niveau du dispositif, il peut être créé à partir du signal Sd au moyen d'un dispositif de récupération d'horloge prévu dans le contrôleur 16, comme schématisé par la flèche en pointillés sur la figure 5.

Ainsi, le contrôleur 16 commande le modulateur de phase 10 périodiquement avec une période égale au temps bit T de façon à créer une modulation de phase dont la profondeur de modulation est ajuster en fonction de la consigne C

Comme on peut le voir schématiquement sur le chronogramme (c), le décalage de pulsation n'est pas constant mais ses fluctuations seront d'autant moins sensibles que les impulsions du signal sont étroites.

Enfin, lorsque le générateur de retard de groupe différentiel est utilisé dans le dispositif de compensation de dispersion de polarisation décrit précédemment, la profondeur maximale de modulation de phase applicable à la composante Sd et/ou la dispersion chromatique DL1 de l'élément dispersif retardateur 12 sont choisies de manière à obtenir une plage de retard qui est au moins égale à deux fois le temps bit du signal d'entrée.

**Revendications**

1. Dispositif générateur de retard de groupe différentiel (DDG) pour signaux optiques ayant la forme d'une modulation d'une onde porteuse possédant une longueur d'onde centrale ($\lambda$), ledit dispositif comportant

   - un séparateur de polarisation (3) muni d'une entrée pour recevoir un signal optique d'entrée (S1) et apte à diviser ledit signal d'entrée (S1) en des première et seconde composantes (Sd, Sq) présentant des états de polarisation orthogonaux,
   - des moyens de retard ajustables (4) disposés pour recevoir ladite première composante (Sd),

   **caractérisé en ce que** lesdits moyens de retard ajustables (4) comprennent :

   - un modulateur de phase réglable (10) apte à appliquer une modulation de phase à l'onde porteuse de ladite première composante (Sd) de façon à fournir un signal intermédiaire (S2) porté par une longueur d'onde centrale modifiée, et
   - un élément dispersif retardateur (12) présentant une dispersion chromatique (DL1), disposé pour recevoir ledit signal intermédiaire (S2) et fournir un signal retardé (S3).

2. Dispositif selon la revendication 1, caractérisé en ce lesdits moyens de retard ajustables (4) comprennent en outre un contrôleur (16) dudit modulateur de phase (10), apte à ajuster en fonction d'une consigne (C) la profondeur de modulation de phase appliquée à ladite première composante (Sd).

3. Dispositif selon la revendication 2, **caractérisé en ce que** ledit signal d'entrée (S1) étant un signal binaire présentant un format de modulation de type RZ avec un temps bit déterminé (T), ledit contrôleur (16) est prévu pour commander ledit modulateur de phase (10) périodiquement avec une période égale audit temps bit (T).

4. Dispositif selon l'une des revendications 1 à 3, **caractérisé en ce que** lesdits moyens de retard ajustables (4) comportent un second élément dispersif (11) disposé pour fournir audit modulateur de phase (10) une composante précompensée (S'd) obtenue à partir de ladite première composante (Sd), ledit second élément dispersif (11) présentant une dispersion chromatique (DL2) de signe opposé à celui de la dispersion chromatique (DL1) présentée par ledit élément dispersif retardateur (12), et dont la valeur absolue est au plus égale à celle dudit élément dispersif retardateur (12).

**5.** Dispositif selon la revendication 4, **caractérisé en ce que** ledit second élément dispersif (11) présente une dispersion chromatique (DL2) dont la valeur absolue est sensiblement égale à celle (DL1) dudit élément dispersif retardateur (12).

**6.** Dispositif selon l'une des revendications 1 à 3, **caractérisé en ce que** ledit signal d'entrée (S1) étant obtenu à partir d'un signal émis (Seλ) et transmis par une liaison optique (LF, DCF), lesdits moyens de retard ajustables (4) comportent un second élément dispersif (11) disposé pour fournir audit modulateur de phase (10) une composante compensée (S'd) obtenue à partir de ladite première composante (Sd), ledit second élément dispersif (11) présentant une dispersion chromatique (DL2) telle que la dispersion chromatique cumulée (DL0, DLc, DL2) de ladite liaison optique (LF, DCF) et dudit second élément dispersif (11) soit de signe opposé à celui de la dispersion chromatique (DL1) présentée par ledit élément dispersif retardateur (12), la valeur absolue de ladite dispersion chromatique cumulée étant au plus égale à celle dudit élément dispersif retardateur (12).

**7.** Dispositif selon l'une des revendications 4 ou 6, **caractérisé en ce qu'**il comporte un troisième élément dispersif de compensation (13) disposé pour recevoir ladite seconde composante (Sq) et présentant une dispersion chromatique (DL3) sensiblement égale à la dispersion chromatique cumulée (DL2, DL1) dudit second élément dispersif (11) et dudit élément dispersif retardateur (12).

**8.** Dispositif selon la revendication 7, **caractérisé en ce que** ledit second élément dispersif (11) présente une dispersion chromatique (DL2) telle que la valeur absolue de ladite dispersion chromatique cumulée (DL0, DLc, DL2) de ladite liaison optique (LF, DCF) et dudit second élément dispersif est sensiblement égale à celle (DL1) dudit élément dispersif retardateur (12).

**9.** Dispositif de compensation de dispersion de polarisation pour système de transmission optique comportant un terminal émetteur (TX) émettant des données sous la forme d'un signal optique polarisé (Seλ), une liaison optique de transmission (LF) et un terminal récepteur (RX), ce dispositif comportant comprenant :

- au moins un contrôleur de polarisation (PC),
- des moyens (DDG) générateurs de retard de groupe différentiel ajustable, ce contrôleur et ces moyens étant intercalés entre la liaison de transmission et le terminal récepteur dans cet ordre,
- et des moyens d'asservissement (CU) pour commander le contrôleur de polarisation (PC) et les moyens (DDG) générateur de retard de groupe différentiel,

**caractérisé en ce que** lesdits moyens (DDG) générateur de retard de groupe différentiel sont conformes au dispositif selon l'une quelconque des revendications 1 à 8.

FIG_1

FIG_2

FIG_3

FIG_4

FIG_5

DDG

CM

LF

SF (DLo)   DCF (DLc)

Seλ   Sr   PC   S1   3   Sq   Sd

4   11   S'd   10   12   S3

6   (DL2)   Δφ   (DL1)

16

C

7   8   13 (DL3)   S4

Sc   RX   5

S2

CU

EP 1 217 765 A1

# FIG_6

## FIG_7

## FIG_8

**Office européen des brevets**

## RAPPORT DE RECHERCHE EUROPEENNE

Numéro de la demande

EP 01 40 3146

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | HEISMANN F ET AL: "Automatic compensation of first order polarization mode dispersion in a 10 Gb/s transmission system" PROCEEDINGS OF THE EUROPEAN CONFERENCE ON OPTICAL COMMUNICATION, XX, XX, vol. 1, 20 septembre 1998 (1998-09-20), pages 529-530, XP002144920 * page 529, colonne de droite, ligne 4 - ligne 11 * * figure 1 * | 1,2,9 | H04B10/18 |
| Y | US 6 104 515 A (CAO XIANG-DONG) 15 août 2000 (2000-08-15) * colonne 3, ligne 17 - ligne 24 * * colonne 6, ligne 16 - ligne 24 * * figure 1 * | 1,2,9 | |
| A | WO 00 60776 A (MIDRIO MICHELE ;ROMAGNOLI MARCO (IT); CORSINI RAFFAELE (IT); FRANC) 12 octobre 2000 (2000-10-12) * abrégé * * page 36, ligne 22 - ligne 29 * * page 41, ligne 16 - ligne 23 * * page 42, ligne 19 - ligne 27 * | 1-3,9 | DOMAINES TECHNIQUES RECHERCHES (Int.Cl.7) |
| A | EP 0 720 031 A (AT & T CORP) 3 juillet 1996 (1996-07-03) * page 5, ligne 3 - ligne 12 * * figure 4 * | 1,4-8 | H04B |

Le présent rapport a été établi pour toutes les revendications

| Lieu de la recherche | Date d'achèvement de la recherche | Examinateur |
|---|---|---|
| LA HAYE | 15 mars 2002 | Reville, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

## ANNEXE AU RAPPORT DE RECHERCHE EUROPEENNE
## RELATIF A LA DEMANDE DE BREVET EUROPEEN NO.

EP 01 40 3146

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

15-03-2002

| Document brevet cité au rapport de recherche | | Date de publication | Membre(s) de la famille de brevet(s) | | Date de publication |
|---|---|---|---|---|---|
| US 6104515 | A | 15-08-2000 | AU | 2210600 A | 18-08-2000 |
| | | | EP | 1155517 A1 | 21-11-2001 |
| | | | WO | 0045531 A1 | 03-08-2000 |
| WO 0060776 | A | 12-10-2000 | AU | 3815700 A | 23-10-2000 |
| | | | WO | 0060776 A1 | 12-10-2000 |
| | | | EP | 1171968 A1 | 16-01-2002 |
| EP 0720031 | A | 03-07-1996 | US | 5600738 A | 04-02-1997 |
| | | | EP | 0720031 A2 | 03-07-1996 |
| | | | JP | 8262248 A | 11-10-1996 |

EPO FORM P0460

Pour tout renseignement concernant cette annexe : voir Journal Officiel de l'Office européen des brevets, No.12/82